# EUROPEAN PATENT SPECIFICATION

(11) **EP 2 817 926 B1**
(45) Date of publication and mention of the grant of the patent: **12.02.2020**
(21) Application number: 13708320.0
(22) Date of filing: 22.02.2013
(51) Int. Cl.: H04L 12/70

(54) **DELEGATE FORWARDING AND ADDRESS RESOLUTION IN FRAGMENTED NETWORK**
DELEGIERTE WEITERLEITUNG UND ADRESSENAUFLÖSUNG IN EINEM FRAGMENTIERTEN NETZWERK
DÉLÉGATION DE TRANSFERT DE DONNÉES ET RÉSOLUTION D'ADRESSE DANS UN RÉSEAU FRAGMENTÉ

(30) Priority: 24.02.2012 US 201261602931 P
(43) Date of publication of application: 31.12.2014
(73) Proprietor: Huawei Technologies Co., Ltd., Longgang District Shenzhen, Guangdong 518129 (CN)
(72) Inventor: DUNBAR, Linda, Plano, Texas 518129 (US); QU, XiaoRong, Cupertino, California 95014 (US)
(74) Representative: Pfenning, Meinig & Partner mbB
(86) International application number: PCT/US2013/027499
(87) International publication number: WO 2013/126831

(56) References cited:
- US-A1- 2009 303 880
- US-A1- 2009 307 334
- ALBERT GREENBERG ET AL: "Towards a Next Generation Data Center Architecture: Scalability and Commoditization", SIGCOMM '08 : PROCEEDINGS OF THE 2008 SIGCOMM CONFERENCE AND CO-LOCATED WORKSHOPS NSDR'08, WOSN'08, MOBIARCH'08, NETECON'08, & PRESTO'08 ; SEATTLE, WA, USA, AUGUST 17 - 22, 2008, NEW YORK, NY : ACM, 17 August 2008 (2008-08-17), pages 57-62, XP007917545, ISBN: 978-1-60558-181-1
- DONALD EASTLAKE HUAWEI AYAN BANERJEE DINESH DUTT CISCO ANOOP GHANWANI DELL RADIA PERLMAN: "Transparent Interconnection of Lots of Links (TRILL) Use of IS-IS; draft-eastlake-isis-rfc6326bis-05.txt", TRANSPARENT INTERCONNECTION OF LOTS OF LINKS (TRILL) USE OF IS-IS; DRAFT-EASTLAKE-ISIS-RFC6326BIS-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, 1 February 2012 (2012-02-01), pages 1-46, XP015080456, [retrieved on 2012-02-01]

## Description

### BACKGROUND

Virtual and overlay network technology has significantly improved the implementation of communication and data networks in terms of efficiency, cost, and processing power. An overlay network may be a virtual environment built on top of an underlay network. Nodes within the overlay network may be connected via virtual and/or logical links that may correspond to nodes and physical links in the underlay network. The overlay network may be partitioned into virtual network instances (e.g. Internet Protocol (IP) subnets) that may simultaneously execute different applications and services using the underlay network. Furthermore, virtual resources, such as computational, storage, and/or network elements may be flexibly redistributed or moved throughout the overlay network. For instance, hosts and virtual machines (VMs) within a data center may migrate to any virtualized server with available resources to perform applications and services. As a result, virtual and overlay network technology has been central to improving today's communication and data network by reducing network overhead while improving network throughput.

In today's networks, gateway nodes, such as routers, are responsible for routing traffic between virtual network instances. When a virtual network instance (e.g. one IP subnet) are enabled on multiple ports of the gateway node, the gateway node may be configured to forward data packets using one or more Equal Cost Multi-Path (ECMP) routing paths for the IP subnet. Moreover, all end nodes (e.g. hosts) in one IP subnet may have the same prefix "10.1.1.X," where the "X" variable may identify one or more end nodes. If there are end nodes in the subnet "10.1.1.X" that are attached to an access node, such as an access switch or Top of Rack (ToR) switch, the access node may advertise the IP subnet prefix "10.1.1.X" via Interior Gateway Protocol (IGP). When a gateway node receives a data packet with a destination address in the IP subnet (e.g."10.1.1.5"), the gateway node may select an ECMP path and forward the data packet via the ECMP path to one of the access nodes that has advertised the IP subnet prefix "10.1.1.X." After receiving the data packet from the gateway node, the access node may forward the frame to the proper access node to which the end node is attached.

Unfortunately, many of today's networks are large and complex such that the networks comprise a massive number of end nodes. For example, highly virtualized data centers may have hundreds of thousands to millions of hosts and VMs because of business demands and highly advanced server virtualization technologies. Albert Greenberg et al discuss in "Towards a Next Generation Data Center Architecture: Scalability and Commoditization" submitted to SIGCOMM Conference 2008 (ISBN 978-1-60558-181-1, pages 57-62) requirements and architecture of such virtualized data centers. As such, gateway nodes may need to provide forwarding path information (e.g. ECMP paths) to numerous end nodes that are spread across many different access nodes. To exacerbate the problem, gateway nodes have limited memory capacity and processing capability that may prevent gateway nodes from maintaining all the forwarding path information for a given virtual network instance. For example, a given virtual network instance may have 256 end nodes attached to 20 different access nodes. The gateway node may be configured to compute a maximum of 10 different ECMP paths, and thus the gateway node may produce ECMP paths that reach 10 of the 20 different access nodes within the given virtual network instance. Moreover, the gateway node may compute ECMP paths for access nodes with a small percentage of end nodes attached to the access nodes. Hence, the gateway node may be unable to provide the forwarding path information to reach many of the end nodes within the given virtual network instance.

As a result, in some instances, a gateway node may select a forwarding path and forward the data packet to an access node in the forwarding path that is not connected to the target end node. The access node in the forwarding path may subsequently receive the data packet and may determine that the access node is not connected to the target end node. At that point, the access node may re-direct the data packet to the proper access node when the access node has the forwarding information of the proper access node. If the access node does not have the forwarding information of the proper access node, the access node may flood the data packet to other access nodes that participate within a given virtual network instance. Networks may increasingly flood data packets as networks become larger, more complex, and end nodes continually migrate across data centers. However, the constant flooding of data packets within the given virtual network instance may adversely impact a network's performance, bandwidth, and processing capacity. Installing additional gateway nodes may not improve a network's performance, bandwidth, and processing capacity because each gateway node needs to reach all end nodes participating in the given virtual network instance. Hence, a solution is needed to efficiently manage the forwarding paths for all end nodes which are not placed based on their IP subnet prefix.

### SUMMARY

In one embodiment, the disclosure includes a method for forwarding data within a virtual network instance comprising a plurality of end nodes using a designated forwarding node, wherein the method comprises maintaining, within a designated forwarding node, a plurality of complete forwarding information for all of the end nodes within the virtual network instance, receiving a data packet destined for any of the end nodes in the virtual network instance, and forwarding the data packet based on the forwarding information, and wherein the designated forwarding node is directly connected to some of the end nodes within the virtual network instance and removing the role as the designated forwarding node for the virtual network instance when resources consumed within the designated forwarding node crosses a certain threshold.

In another embodiment, the disclosure includes a network node, configured as a designated forwarding node within a virtual network instance comprising a plurality of end nodes, comprising a processor configured to maintain a plurality of complete forwarding information for all of the end nodes within the virtual network instance; receive a data packet destined for any of the end nodes in the virtual network instance and forward the data packet based on the forwarding information, wherein the network node is directly connected to some of the end nodes within the virtual network instance and removing the role as the designated forwarding node for the virtual network instance when resources consumed within the designated forwarding node crosses a certain threshold.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1A is a schematic diagram of an embodiment of a network that delegates the responsibility of forwarding and resolving addresses of virtual network instances typically managed by a gateway node to one or more designated forwarding nodes.
FIG. 1B is a schematic diagram of another embodiment of a network that delegates the responsibility of forwarding and resolving addresses of virtual network instances typically managed by a gateway node to one or more designated forwarding nodes.
FIG. 2A is a flowchart of an embodiment of a method for selecting a designated forwarding node for a given virtual network instance.
FIG. 2B is a flowchart of an embodiment of a method for selecting a non-designated forwarding node for a given virtual network instance.
FIG. 3 is a flowchart of an embodiment of a method for updating forwarding information using a directory node.
FIG. 4 is a flowchart of an embodiment of a method for updating forwarding information without a directory node.
FIG. 5 is a table describing the elements of an embodiment of the "connection status" message.
FIG. 6 is a table describing the elements of an embodiment of the announcement message sent by a designated forwarding node.
FIG. 7 is a table describing the elements of an embodiment of a capability announcement message sent by a designated forwarding node.
FIG. 8 is a flowchart of an embodiment of a method for a node to remove its role as a designated forwarding node for a virtual network instance.
FIG. 9 is a table describing the elements of an embodiment of a virtual network instance priority table.
FIG. 10 is a table describing the elements of an embodiment of a designated forwarding node priority table.
FIG. 11 is a schematic diagram of one embodiment of a general-purpose computer system suitable for implementing the several embodiments of the disclosure.

### DETAILED DESCRIPTION

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques described below, including the exemplary designs and implementations illustrated and described herein, but may be modified within the scope of the appended claims along with their full scope of equivalents.

Disclosed herein are a method, an apparatus, and a system that delegates forwarding and address resolution responsibilities for virtual network instances. An overlay network may be partitioned into a plurality of virtual network instances. One or more designated forwarding nodes may be selected to be responsible for all of the forwarding information for each virtual network instance. A node may advertise via an announcement message and/or a capability announcement message the virtual network instances the node has been selected as a designated forwarding node. Selecting designated forwarding nodes may be based on employing a threshold value and/or configuring a node to be a designated forwarding node by a network administrator. Designated forwarding nodes may obtain the forwarding information for a given virtual network instance from a directory node or by listening to IGP advertisement (e.g. link state advertisement) of access nodes announcing the connectivity status of end nodes attached to the access nodes. Additionally, a designated forwarding node may advertise reachability information for end nodes directly attached to the designated forwarding node. Designated forwarding nodes may also be able to resolve the mapping between end nodes and their directly attached access nodes. Designated forwarding nodes may also relinquish and re-allocate the responsibility of being a designated forwarding node for one or more virtual network instances to other nodes when the designated forwarding node's resource for managing the virtual network instances exceeds a certain limit.

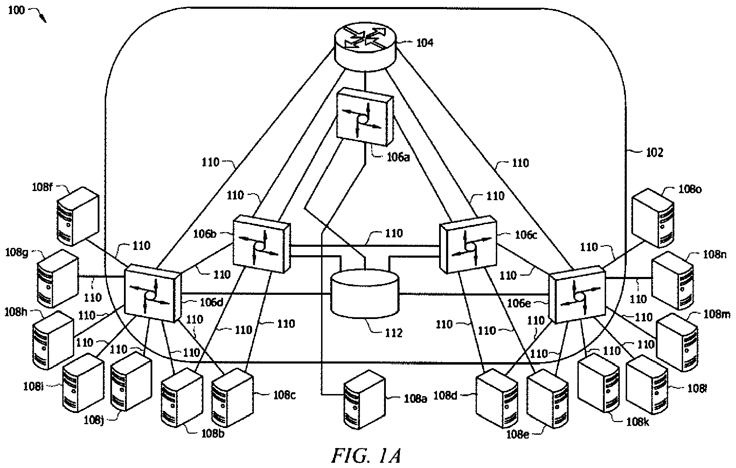

FIG. 1A is a schematic diagram of an embodiment of a network 100 that delegates the responsibility of forwarding and resolving addresses of virtual network instances typically managed by a gateway node to one or more designated forwarding nodes. In one embodiment, the network 100 may be a network that uses flat addresses or addresses that may not be subdivided, such as Media Access Control (MAC) addresses as defined in the Institute of Electrical and Electronic Engineers (IEEE) 802.1Q standard, which is herein incorporated by reference. In another embodiment, the network 100 may be a network that has fragmented addresses. For example, network 100 may have fragmented addresses when one Internet Protocol (IP) subnet spans across multiple gateway node ports and each gateway node port may have one or more enabled IP subnets. Network 100 may be a network comprising one or more local area networks (LANs), metropolitan area networks (MANs), and/or wide area networks (WANs). In one embodiment, network 100 may be a data center network. FIG. 1A illustrates that network 100 may comprise an underlay network 102, a gateway node 104, access nodes 106a-e, end nodes 108a-o, a plurality of logical connections 110, and a directory node 112. Persons of ordinary skill in the art are aware that other embodiments of network 100 may comprise more than one gateway node 104.

The underlay network 102 may be any physical network capable of supporting an overlay network, such as an IP network, a virtual local area network (VLAN), a Transparent Interconnection of Lots of Links (TRILL) network, a Provider Back Bone (PBB) network, a Shortest Path Bridging (SPB) network, Generic Routing Encapsulation (GRE) network, Locator/Identifier Separation Protocol (LISP) network, and Optical Transport Virtualization (OTV) (using User Datagram Protocol (UDP)). The underlay network 102 may operate at Open Systems Interconnection (OSI) layer 1, layer 2, or layer 3. The underlay network 102 may comprise a plurality of physical network nodes that may be interconnected using a plurality of physical links, such as electrical links, optical links, and/or wireless links. The physical network nodes may include a variety of network devices such as routers, switches, and bridges. The underlay network 102 may be bounded by edge nodes (e.g. access node 106a-e) that encapsulate another header, such as an IP header, MAC header, or TRILL header for incoming data packets received outside the underlay network 102 (e.g. an overlay network) and decapsulate the header for outgoing data packets received from the underlay network 102. In FIG 1A, gateway node 104 and access nodes 106a-e may be part of the underlay network 102.

The overlay network may comprise a plurality of virtual network instances, such as IP subnets that partition the overlay network. The virtual network instance may be represented by many different types of virtual network instance identifiers, such as VLAN identifiers (VLAN-IDs), Service Instance Identifier (ISID), IP subnet addresses, GRE key fields, and any other identifiers known to persons of ordinary skill in the art. In one embodiment, each virtual network instance may be represented by one virtual network identifier. Other embodiments may constrain forwarding of data traffic by using more than one virtual network identifiers to represent a virtual network instance. The plurality end nodes 108 in a plurality of virtual network instances may be scattered across one or more access nodes 106a-e within network 100.

Gateway node 104 may include gateway routers, access switches, Top of Rack (ToR) switches, or any other network device that may promote communication between a plurality of virtual network instances within the overlay network. Gateway node 104 may be at the edge of the underlay network 102 and may receive and transmit data to other networks not shown in FIG. 1A. Access nodes 106a-e may be access switches, ToR switches, or any other network device that may be directly connected to end nodes 108a-o. Access nodes 106a-e and end nodes 108a-o may be collectively referred to throughout the disclosure as access nodes 106 and end nodes 108, respectively. Access nodes 106 may be located at the edge of the underlay network 102 and may be configured to encapsulate data packets received from end nodes 108 with another header. Access nodes 106 may be called the ingress edge when performing the encapsulating function. Access node 106 a-e may also be configured to decapsulate the header for data packets received from within the underlay network 102 and forward to end nodes 108. Access nodes 106 may be called the egress edge when performing the decapsulating function. Access nodes 106a-e may be configured to process the data packets at the OSI layer 2 and/or OSI layer 3.

In one embodiment, end nodes 108 may be located outside the underlay network 102 and within an overlay network. The underlay network may be a different autonomous system or a different network than the underlay network 102. In one embodiment, the underlay network and overlay network may be a client-server relationship where the client network represents the overlay network, and the server network represents the underlay network. End nodes 108 may be client-centric devices that include servers, storage devices, hosts, virtualized servers, VMs and other devices that may originate data into or receive data from underlay network 102. The end nodes 108 may be configured to join and participate within the virtual network instances.

Within network 100, the gateway node 104, access nodes 106, and end nodes 108 may be interconnected using a plurality of logical connections 110. The logical connections 110 may connect the nodes for a given virtual network instance and may create paths that use one or more physical links. The logical connections 110 may be used to transport data between the gateway node 104, access nodes 106, and end nodes 108 that participate in the given virtual network instance. The logical connections 110 may comprise a single connection, a series of parallel connection, and/or a plurality of logically interconnected nodes that are not shown in FIG. 1A. Different logical connections 110 may be used depending on the type of underlay network and overlay network implemented over the underlay network 102. For example, for the overlay network, the types of logical connections 110 may include, but are not limited to multiprotocol label switching (MPLS) tunnels, label switch path (LSP) tunnels, GRE tunnels, and IP tunnels. Within each virtual network instance, gateway node 104 and access nodes 106 may be interconnected via the logical connections 110 to form different network topologies and layouts than the one shown in FIG. 1A. As shown in FIG. 1A, the gateway node 104 may be directly attached to many access nodes 106. Some of the access nodes 106 may be selected as designated forwarding nodes for a given virtual network instance, while other access nodes 106 may not be selected as designated forwarding nodes within the given virtual network instances. Gateway node 104 may be configured to maintain forwarding entries for designated forwarding nodes and may not maintain forwarding entries for access nodes 106 not selected as designated forwarding nodes.

Each access node 106 within network 100 may be directly attached to one or more end nodes 108 via a logical connection 110. More specifically, access node 106a may be directly attached to end node 108a; access node 106b may be directly attached to end nodes 108b and 108c; access node 106c may be directly attached to end nodes 108d and 108e; access node 106d may be directly attached to end nodes 108b and 108f-j; and access node 106e may be directly attached to end nodes 108e and 108k-o. When an end node 108 is directly attached to an access node 106, the access node 106 may forward a data packet to end node 108 without forwarding the data packet to another access node 106. For example, access node 106a may forward a data packet destined for end node 108a directly to end node 108a. Access node 106a may not need to forward the data packet to other access nodes 106 (e.g. access node 106b) participating in the same virtual network instance in order to reach end node 108a.

FIG. 1A illustrates that a directory node 112 may be coupled to access nodes 106 via logical connections 110. Directory node 112 may be a central orchestration system or any other device that provides management functions and/or network topology information. In one embodiment, directory node 112 may provide the location information for all of the end nodes 108 that are directly attached to access nodes 106 that participate in the given virtual network instance. Recall that access nodes 106 may participate in the given virtual network instance by advertising the virtual network instance. A designated forwarding node may obtain some or all of the forwarding information for a given virtual network instance from the directory node 112.

A designated forwarding node may be any node, such as a gateway node 104, an access node 106, or a directory node 112, configured to provide some or all the forwarding information for a given virtual network instance. More than one designated forwarding node may participate within the given virtual network instance. Furthermore, a node may be selected as a designated forwarding node for one or more virtual network instances. Using FIG. 1A as an example, access nodes 106b and 106c may be selected as designated forwarding nodes for a given virtual network instance in network 100. Furthermore, access node 106b may be selected as a designated forwarding node for more than one virtual network instance (e.g. virtual network instance #1 and virtual network instance #2). In one embodiment, access nodes 106 not selected as designated forwarding nodes may announce reachability information to a given virtual network instance that includes an indication that the access nodes 106 do not have the complete forwarding information for end nodes participating in the given virtual network instance.

Instead of maintaining forwarding paths (e.g. ECMP paths) to each access node 106 that advertises a given virtual network instance, the gateway node 104 may maintain forwarding path information to some or all of the designated forwarding nodes that participate in the given virtual network instance. Using FIG. 1A as an example, a gateway node 104 may receive a data packet with destination address "10.1.1.5." The gateway node 104 may select a forwarding path that reaches one of the designated forwarding nodes (e.g. access node 106a) for the IP subnet (e.g. virtual network instance) with prefix "10.1.1.X." When multiple designated forwarding nodes participate within the IP subnet "10.1.1.X," the gateway node may select the forwarding path based on one or more routing protocols such as ECMP. The gateway node 104 may subsequently forward the data packet to access node 106a because access node 106a has been selected as a designated forwarding node. When access node 106a receives the data packet for the IP subnet "10.1.1.X," access node 106a may forward the data packet to the target end node 108. If the target end node 108 is attached to access node 106a, such as end node 108a, then access node 106a may send the data packet directly to end node 108a. However, if the proper end node 108 is not attached to access node 106a, access node 106a may send the data packet to the proper access node 106 that is attached to the target end node 108. Flooding of the data packet may not occur because as a designated forwarding node, access node 106a may have all the forwarding information for the given virtual network instance. In one embodiment, the number of designated forwarding nodes selected for a given virtual network instance may be less than or equal to the maximum number of forwarding paths the gateway node 104 is able to compute.

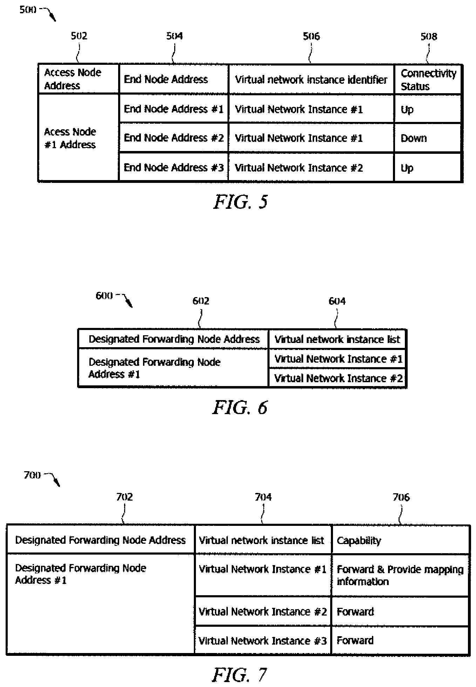

The gateway node 104 may determine which nodes have been selected as a designated forwarding node by receiving and processing an announcement message from a designated forwarding node. Each designated forwarding node may advertise an announcement message, while other nodes not selected as designated forwarding nodes may not advertise an announcement message. A designated forwarding node may transmit the announcement message within each virtual network instance the node has been selected as a designated forwarding node. The announcement message may provide the virtual network instances that a node has been selected as a designated forwarding node and other reachability information. Using FIG 1A as an example, access node 106a may advertise that access node 106a may be selected as an designated forwarding node for virtual network instance #1 and virtual network instance #2, while access node 106b may advertise that access node 106b may be selected as an designated forwarding node for virtual network instance #1. The announcement message advertised by each designated forwarding node may be processed by the gateway node 104 and/or other access nodes 106 within underlay network 102. The announcement message will be discussed in more detail in FIG. 6.

In another embodiment, a designated forwarding node may advertise within the announcement message the capabilities of the designated forwarding node. The announcement message that provides capability information may be referred to in the remainder of the disclosure as the capability announcement message. The designated forwarding node may be configured to provide a forwarding capability and/or a mapping capability. Recall that the designated forwarding node may receive a data packet from a gateway node 104 and forward the data packet received from the gateway node 104 to the target end node 108. In this embodiment, the designated forwarding node may be designated as providing a forwarding capability. When the designated forwarding node is configured to support a mapping ability, the designated forwarding node may be able to resolve mapping between end nodes 108 (e.g. host addresses) and their directly attached access nodes 106. In another embodiment, the designated forwarding node may be able to resolve mapping between end nodes (e.g. IP or MAC host addresses) to their corresponding egress overlay edge nodes in overlay environment. For example, a designated forwarding node (e.g. access node 106a) may receive a unicast message from an access node 106d within the given virtual network instance to resolve the addresses between the access node 106d, and one or more end nodes 108c-f directly attached to access node 106d. The unicast message may comprise an OSI layer 3 address (e.g. IP address). After receiving the unicast message, the designated forwarding node may perform a look up using the OSI layer 3 address to determine the corresponding OSI layer 2 address (e.g. MAC address) for one of the end nodes 108 (e.g. end node 108c). Afterwards, the designated forwarding node may transmit back to access node 106d the corresponding OSI layer 2 address. In one embodiment, an access node 106 may transmit a multicast message to a group of designated forwarding nodes to resolve mapping between end nodes 108 and their directly attached access node 106. Similar to the announcement message, the capability announcement message may be advertised by designated forwarding nodes, and may not be advertised by nodes not selected as designated forwarding nodes. Moreover, the capability announcement message may be processed by the gateway node 104 and/or other access nodes 106 within underlay network 102. The capability announcement message will be discussed in more detail in FIG. 7.

End nodes 108 may be directly attached to one or more access nodes 106. FIG. 1A illustrates that end node 108b is directly attached to access node 106b and 106d, while end node 108e is directly attached to access node 106c and 106e. When a given virtual network instance has two or more access nodes 106 directly attached to one end node 108, each access node 106 within the virtual network instance may advertise a "connection status" message that indicates whether the connection to each attached end node 108 is operational. In other words, the advertisement of the "connection status" message may indicate whether the connection is currently operational between the end node 108 and the directly attached access node 106. Using FIG. 1A as an example, in a given virtual network instance, the logical connection 110 between access node 106b and end node 108b may have experience a fault that prevents communication between the two nodes. Access node 106b may advertise a "down" connection status for end node 108b. On the other hand, the logical connection 110 between access node 106d and end node 108b may be functioning. Access node 106d may advertise an "up" connection status for end node 108b. Nodes selected as a designated forwarding node (e.g. access node 106a) for the given virtual network instance may receive the "connection status" message and may use the information to update forwarding tables, such as a forwarding information base (FIB) and a filtering database. All other nodes not selected as designated forwarding nodes (e.g. access node 106e) within the given virtual network instance that receive the "connection status" message may ignore or discard the "connection status" message. Each access node 106 may advertise the "connection status" message when the connectivity to the end nodes 108 changes for a given virtual network instance (e.g. moves from "up" status to "down" status). The "connection status" message will be discussed in more detail in FIG. 5.

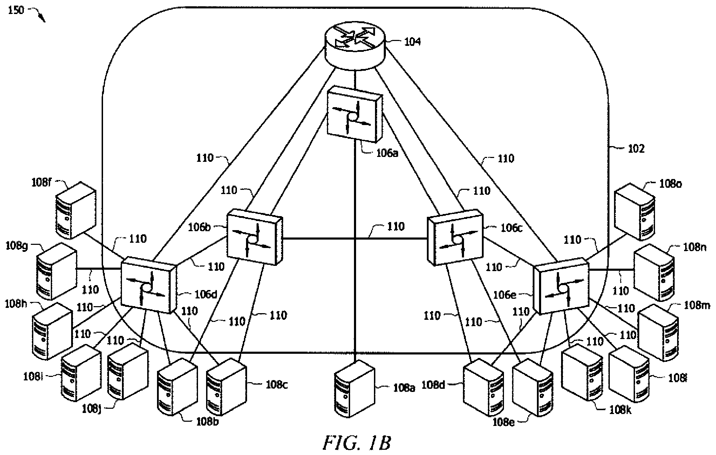

FIG. 1B is a schematic diagram of another embodiment of a network 150 that delegates the responsibility of forwarding and resolving addresses of virtual network instances typically managed by a gateway node to one or more designated forwarding nodes. In FIG. 1B, network 150 may be substantially similar to network 100 in FIG. 1A, except that network 100 does not comprise a directory node. When no directory server exists, each designated forwarding node may advertise reachability information via an IGP advertisement, such as an Intermediate System to Intermediate System (IS-IS) link state advertisement or other routing protocols. IGP advertisements may provide reachability information that may include, end node addresses, end node-to-end node routes, MAC addresses, and virtual network instance information. The IGP advertisements may also provide reachability information for end nodes 108 directly attached to the advertising designated forwarding node. Designated forwarding nodes may advertise the reachability information in addition to the "connection status" message, while non-designated forwarding nodes may advertise the "connection status" message. Designated forwarding nodes that receive the IGP advertisement and "connection status" message for a given virtual network instance may process the messages to update the forwarding tables, while the non-designated forwarding nodes for the given virtual network instance may discard or ignore both types of messages.

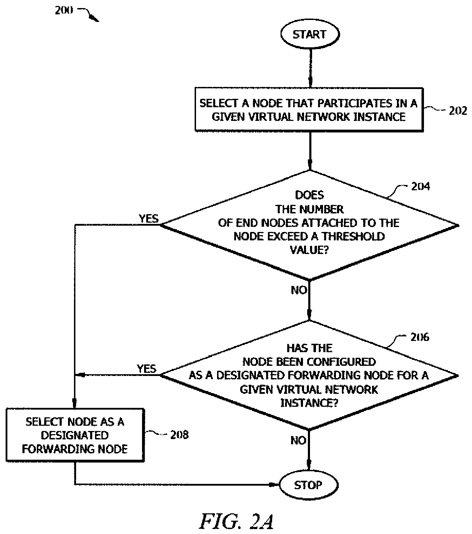

FIG. 2A is a flowchart of an embodiment of a method 200 for selecting a designated forwarding node for a given virtual network instance. In one embodiment the overlay network may be an IP network. Method 200 may start at block 202 and select a node that participates in a given virtual network instance. The node may be an access node, a directory node, or any other type of node that is configured to manage the forwarding information for the given virtual network instance. Once method 200 selects a node within a given virtual network instance, method 200 continues to block 204.

At block 204, method 200 may determine whether the number of end nodes attached to the node within a given virtual network instance exceeds a threshold value. The threshold value may be a number and/or based on a percentage set by an operator or network administrator. For example, when a virtual network instance (e.g. IP subnet) has 100 end nodes distributed among 50 virtualized access nodes, the threshold value may be set to 5% or five end nodes. If the number of virtualized end nodes directly attached to the virtualized node exceeds the threshold value, method 200 may move to block 208. However, if the number of end nodes attached to the node does not exceed the threshold value, method 200 may move to block 206.

At block 206, method 200 may determine whether the node has been configured as a designated forwarding node for a given virtual network instance. In one embodiment, a network administrator and/or operator may have configured the node as a designated forwarding node. For example, a gateway node may be able to support a maximum of 32 ECMP paths. The network administrator may statically configure certain access nodes as designated forwarding nodes as long as the number of designated forwarding nodes is equal to or less than 32. The network administrator may select certain nodes as designated forwarding nodes even though the end nodes may be migrated to different access nodes for the given virtual network instance. If method 200 determines that a network administrator and/or operator has configured the node as a designated forwarding node, then method 200 may continue to block 208; otherwise, method 200 stops. At block 208, method 200 may select the node as a designated forwarding node for the virtual network instance. As discussed above, the designated forwarding node may be configured to maintain all the forwarding information for a given virtual network instance.

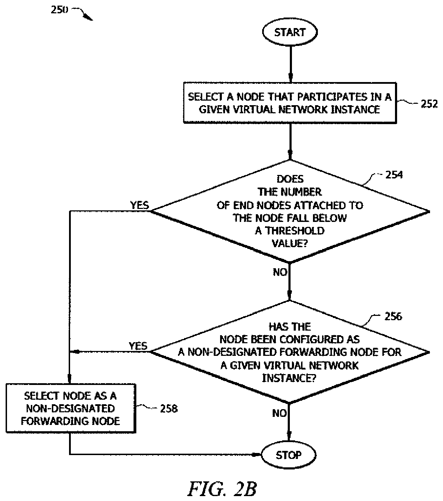

FIG. 2B is a flowchart of an embodiment of a method 250 for selecting a non-designated forwarding node for a given virtual network instance. In contrast to method 200, method 250 may determine whether a node may be selected as a non-designated forwarding node or a node that may not be selected as a designated forwarding node. Block 252 of method 250 may be substantially similar to blocks 202 of method 200, respectively. At block 254, method 250 may use the threshold value as a "not designated threshold" to select non-designated forwarding nodes instead of selecting designated forwarding nodes. If the number of end nodes attached to the node falls below the threshold value, method 250 may move to block 258 and select the node as a non-designated forwarding node. However, if the number of end nodes directly attached to the node does not fall below the threshold value, method 250 may move to block 256. At block 256, method 250 may determine whether a network administrator has selected the node as a non-designated forwarding node. When a network administrator has configured the node as a non-designated forwarding node, method 250 may proceed to block 258 and select the node as a non-designated forwarding node. Conversely, if a network administrator has not selected the virtualized node as a non-designated forwarding node, method 250 may stop.

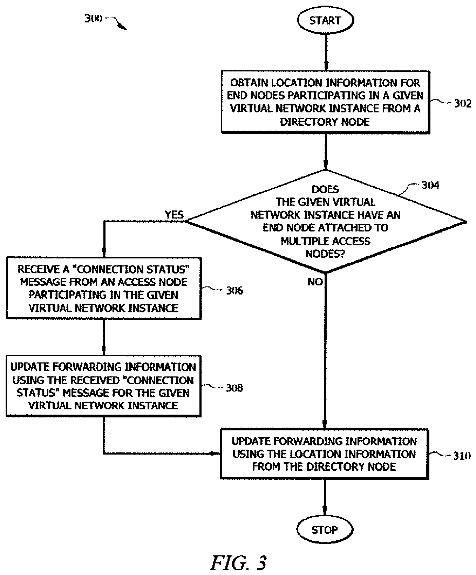

FIG. 3 is a flowchart of an embodiment of a method 300 for updating forwarding information using a directory node. Method 300 may pertain to networks with directory nodes, such as network 100 shown in FIG. 1A. The directory nodes may provide and update the forwarding information for the selected designated forwarding nodes. Method 300 may start at block 302 and obtain the location information for end nodes participating in a given virtual network instance from the directory node. The location information may be for some or all of the end nodes participating in the virtual network instance. Afterwards, method 300 moves to block 304 to determine whether an end node is attached to multiple access nodes that participate in the given virtual network instance. If method 300 determines that an end node is attached to multiple access nodes that participate in the given virtual network instance, then method proceeds to block 306. However, if method 300 determines if an end node is not attached to multiple end nodes that participate in the given virtual network instance, then method 300 proceeds to block 310.

At block 306 method 300 may receive a "connection status" message from an access node participating in the given virtual network instance. Recall that when multiple access nodes are connected to an end node within a given virtual network instance, access nodes may advertise the "connection status" message to the designated forwarding nodes for the given virtual network instance. Once method 300 receives a "connection status" message, method 300 may move to block 308 and update the forwarding information using the received "connection status" message for the given virtual network instance. Method 300 may then proceed to block 310 and update the forwarding information using the location information from the directory node. In one embodiment, method 300 may update one or more entries in a forwarding table, such as a FIB and a filtering database.

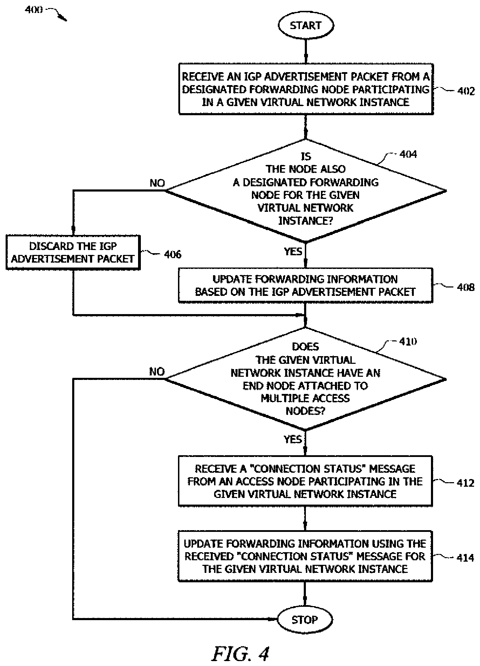

FIG. 4 is a flowchart of an embodiment of a method 400 for updating forwarding information without a directory node. In contrast to method 300, method 400 pertains to networks that may not comprise a directory node such as network 150 as shown in FIG. 1B. To update forwarding information in designated forwarding nodes, designated forwarding nodes may advertise reachability information for directly attached end nodes via an IGP advertisement. The IGP advertisement may be a link state advertisement, such as IS-IS an advertisement that is broadcasted to other nodes that participate in a given virtual network instance. Designated forwarding nodes for the given virtual network instance may process the message to update forwarding information. Nodes not selected as designated forwarding nodes and in the virtual network instance may ignore and/or discard the IGP advertisement message. Similar to FIG. 3, designated forwarding nodes may also process "connection status" messages that are transmitted within the given virtual network instance.

Method 400 may start at block 402 and receive a IGP advertisement packet from an designated forwarding node participating in a given virtual network instance. Method 400 may then proceed to block 404 to determine whether the node has been selected as a designated forwarding node for the given virtual network instance. At block 404, method 400 may determine whether the node has been selected as a designated forwarding node using methods described in FIGS. 2A and 2B. If the node has not been selected as a designated forwarding node, method 400 may proceed to block 406 and discard the IGP advertisement packet. However, if the node has been selected as a designated forwarding node, then the node may proceed to block 408. At block 408, method 400 may update the forwarding information by updating one or more entries in a FIB or a filtering database, based on the IGP advertisement packet. Afterwards, method 400 may proceed to block 410.

At block 410, method 400 may determine whether an end node is attached to multiple access nodes that participate in the given virtual network instance. If method 400 determines that an end node is attached to multiple access nodes that participate in the given virtual network instance, then method 400 proceeds to block 412. However, if method 400 determines if an end node is not attached to multiple end nodes that participate in the given virtual network instance, then method 400 stops. Blocks 412 and 414 may be substantially similar to blocks 306 and 308 of method 300. After method 400 completes block 414, method 400 ends.

FIG. 5 is a table describing the elements of an embodiment of the "connection status" message 500. Recall that access nodes may transmit a "connection status" message that announces the connectivity status for the end nodes directly attached to the access nodes. The access node may transmit the "connection status" message when changes occur in the connectivity status between the access node and one or more end nodes directly attached to the access node. The "connection status" message may provide the virtual network instances associated with the end node and the status of the connection. Designated forwarding nodes that receive the "connection status" message for the given virtual network instance may update the forwarding information. All other non-designated forwarding nodes may ignore and/or discard the "connection status" message. In one embodiment, the "connection status" message may be broadcasted as a link state advertisement (e.g. IS-IS) with extended type-length-value (TLV).

The "connection status" message 500 may comprise an access node address field 502, an end node address field 504, a virtual network instance identifier field 506, and a connectivity status field 508. The access node address field 502 may indicate the address of the access node that transmitted the "connection status" message 500. Access node #1 address may be the address of the access node that transmitted the "connection status" message 500. The end node address field 504 may indicate the address of the end nodes that are directly attached to the access node that is transmitting the "connection status" message 500. In FIG. 5, access node #1 may be directly attached to end nodes with end node address #1, end node address #2, and end node address #3. In one embodiment, the access node address #1 and end node addresses #1-#3 may be MAC addresses. The virtual network instance identifier field 506 may identify the virtual network instance that the end nodes may be associated with. FIG. 5 illustrates that end nodes #1 and #2 may participate in virtual network instance #1, and end node #3 may participate in virtual network instance #2. As discussed above, VLAN IDs and other identifiers (e.g. ISID) may be used to identify the virtual network instance. The connectivity status field 508 may indicate whether the connection is "up" (e.g. can transmit data) or "down" (e.g. unable to transmit data) within the virtual network instance identified by the virtual network instance identifier field 506. FIG. 5 shows that the connectivity status for end node #1 in virtual network instance #1 and end node #3 in virtual network instance #2 may be "up," while the connectivity status for end node #2 in virtual network instance #1 may be "down." Access nodes may transmit "connection status" message 500 when the connectivity status for one of the end nodes in one of the virtual network instances transitions from an "up" state to a "down" state. For example, if the connectivity status for end node #1 at virtual network instance #1 transitions to a "down" state, access node #1 may transmit the "connection status" message 500 within virtual network instance #1.

FIG. 6 is a table describing the elements of an embodiment of the announcement message 600 sent by a designated forwarding node. The announcement message 600 may comprise a designated forwarding node address field 602 and a virtual network instance list field 604. The designated forwarding node address field 602 may indicate the address of the designated forwarding node that transmitted (e.g. broadcast) announcement message 600. In FIG. 6, the designated forwarding node address #1 may be the address of the designated forwarding node that transmitted announcement message 600. The virtual network instance list field 604 may indicate the virtual network instances that the node has been selected as a designated forwarding node. In FIG. 6, designated forwarding node #1 may be a designated forwarding node for virtual network instance #1 and virtual network instance #2. In one embodiment the virtual network instance list field 604 may identify the virtual network instances using an identifier substantially similar to the identifier used in virtual network identifier field 506 in FIG. 5. As discussed above, designated forwarding node may send announcement message 600 when a directory node is not available to obtain forwarding information. Using FIG. 1B as an example, access node 106b may be selected as a designated forwarding node for virtual network instance #1 and virtual network instance #2. In one embodiment, the announcement message 600 may be a link-state advertisement with extended type-length-value (TLV).

FIG. 7 is a table describing the elements of an embodiment of a capability announcement message 700 sent by a designated forwarding node. The capability announcement message 700 may comprise a designated forwarding node address field 702, a virtual network instance list field 704, and a capability field 706. The designated forwarding node address field 702 and the virtual network instance list field 704 may be substantially similar to the designated forwarding node address field 602 and virtual network instance list field 604. In FIG. 7, the designated forwarding node address #1 may be the address of the designated forwarding node providing the capability announcement message 700, and virtual network instances #1-#3 may be the virtual network instances that the node has been selected as a designated forwarding node. The capability field 706 may indicate the types of configurations for a designated forwarding node. FIG. 7 illustrates that designated forwaring node address #1 may be a designated forwarding node configured with a forwarding ability and a mapping ability within virtual network instance #1, while for virtual network instances #2 and #3, the designated forwarding node may have the forwarding capability without the mapping ability. Similar to announcement message 600, capability announcement message 700 may be a link-state advertisement with extended type-length-value (TLV).

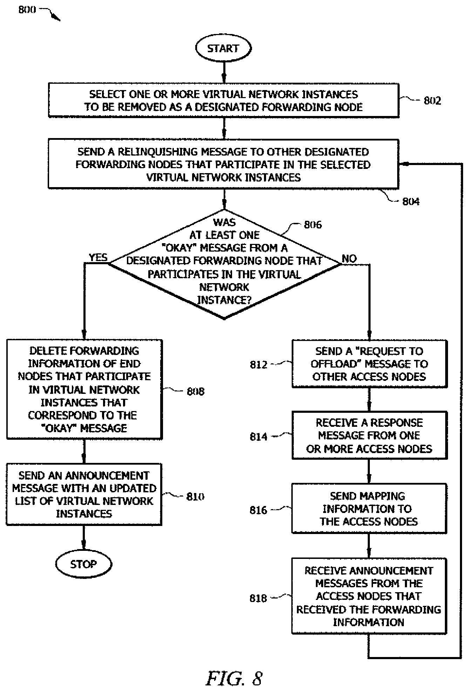

FIG. 8 is a flowchart of an embodiment of a method 800 for a node to remove its role as a designated forwarding node for a virtual network instance. As a designated forwarding node, a node may become overloaded with managing the forwarding entries and/or forwarding information for virtual network instances. When the resources allocated to manage the forwarding entries and/or forwarding information exceeds a certain threshold, the designated forwarding node may alleviate some of its workload. To alleviate the node's workload, the node may reduce the number of virtual network instances that the node acts as a designated forwarding node. The node may remove the role of being a designated forwarding node for a given virtual network instance when at least one other designated forwarding node has been selected within the virtual network instance. When no other designated forwarding node is available to take over the designated forwarding node role, the node may send a "request to offload" message to select other nodes to become designated forwarding nodes. If the no other node may be selected as a designated forwarding node, the designated forwarding node may select choose another virtual network instance based on priority.

Method 800 starts at block 802 and may select one or more virtual network instances to be removed as a designated forwarding node. Each designated forwarding node may maintain priority values for each supported virtual network instances. When there are multiple virtual network instances whose forwarding entries may be deleted, the designated forwarding node may start with virtual network instances with the lower priority values. In one embodiment, the priority levels may be configured by a network administrator and/or operator. The network administrator and/or operator may select at least two designated forwarding nodes to maintain the forwarding information for each virtual network instance. Alternatively, priority values may be calculated based on the difficulty level in reaching end nodes participating in the virtual network instance. For example, round trip delay calculations, number of links, and bandwidth may be some of the ways in determining the difficulty level to reach end nodes. Priority values may also be determined based on the frequency end nodes within a given virtual network instance are requested to transmit and/or receive data packets. If within a certain time period that data packets are not transmitted and/or received by end nodes within the given virtual network instance, then method 800 may downgrade the priority level.

After method 800 finishes selecting the virtual network instance, method 800 may move to block 804 and send a relinquishing message to all other designated forwarding nodes that participate in a given virtual network instance. The relinquishing message may indicate that the node wants to delete its role as a designated forwarding node for the given virtual network instance. In other words, the node no longer desires to store the forwarding information for nodes that participate in the given virtual network instance. Designated forwarding nodes participating in the given virtual network instance may process the relinquishing message, while other non-designated forwarding nodes may ignore or discard the relinquishing message. Using FIG. 1A as an example, access node 106a, as a designated forwarding node, may send a relinquishing message within the given virtual network instance. Access nodes 106b and 106c may ignore or discard the relinquishing message if both access nodes 106 are not designated forwarding nodes. Access nodes 106d and 106e may process the relinquishing message if both access nodes 106 have been selected as designated forwarding nodes. In another embodiment, the relinquishing message may comprise a list of virtual network instances (e.g. virtual network instance #1, virtual network instance #2, etc.) that the node desires to be removed as a designated forwarding node.

Method 800 may then move to block 806 and determines whether an "okay" message was received from another designated forwarding node that participates in the given virtual network instance. After receiving the relinquishing message, other designated forwarding nodes participating in the given virtual network instance may send an "okay" message. When the relinquishing message comprises a list of virtual network instances, method 800 may receive multiple "okay" messages from other designated forwarding nodes that participate in one or more of the virtual network instances listed in the relinquishing message. If method 800 receives one or more "okay" messages, method 800 continues to block 808. However, if method 800 does not receive an okay message, then method 800 moves to block 812.

At block 808, method 800 deletes the forwarding information of the end nodes that participate in the virtual network instance. As discussed in block 806, method 800 may receive more than one "okay" message that corresponds to more than one virtual network instance. Method 800 may delete the forward entries for each virtual network instance that corresponds to each received "okay" message. For example, a relinquishing message may comprise virtual network instance #1, virtual network instance #2, and virtual network instance #3. At block 806, method 800 receives only an "okay" message from virtual network instance #1. At block 808, method 800 deletes the forwarding entries for only virtual network instance #1. Method 800 may then proceed to block 810 and send an announcement message as described in FIG. 6 with an updated list of virtual network instances that the node still acts as a designated forwarding node. Announcement message may not be sent when a director node provides the location information for the end nodes participating in the given virtual network instance. Afterwards, method 800 may end.

Returning to block 812, when method 800 does not receive an "okay" message for the given virtual network instance listed in the relinquishing message, method 800 may send a "request to offload" message to access nodes that participate in the virtual network instance. The "request to offload" message may request other access nodes to take over as a designated forwarding node for a specified network instance. In an embodiment, the "request to offload" message may list more than one virtual network instance that access nodes may need to take over as designated forwarding nodes. Method 800 then proceeds to block 814.

At block 814, method 800 may receive a response message from one or more access nodes that are willing to take over the designated forwarding node role for the specified virtual network instance. Afterwards, method 800 moves to block 816 to send forwarding information for the end nodes that participate in the specified virtual network instance. In another embodiment, the access node willing to take over the designated role may obtain the forwarding information for a directory node. Method 800 may then continue to block 818 and receive an announcement message, as discussed in FIG. 6, from the access nodes willing to take over the designated forwarding node role. Once an access node has obtained the forwarding information to become a designated forwarding node, the access node may send an announcement message communicating to the node that access node is a designated forwarding node for the given virtual network instance. The access node may obtain the forwarding information from a directory server and/or from a designated forwarding node. At that point, method 800 may loop back to block 802.

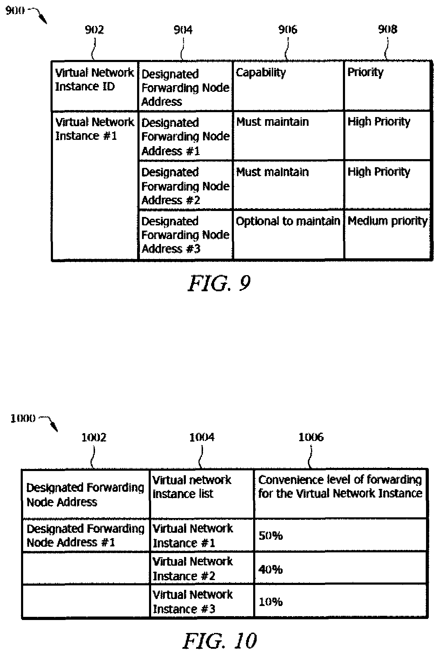

FIG. 9 is a table describing the elements of an embodiment of a virtual network instance priority table 900. As discussed before, a virtual network instance may have one or more designated forwarding nodes that provide forwarding information for the virtual network instance. The designated forwarding nodes participating in the virtual network instance may have varying priorities in determining whether to maintain the designation node role. The assigned priority values and capability may determine the virtual network instances that may be relinquished by a designated forwarding node. The virtual network instance priority table 900 may be stored within a designated forwarding node, a directory node, and/or some other network device. In FIG. 9, designated forwarding node #3 may relinquish the designated forwarding node role, while designated forwarding nodes #1 and #2 may not be able to relinquish the designated forwarding node role. When a designated forwarding node #3 becomes overloaded, the designated forwarding node #3 may delete the mapping entries for virtual network instance #1 since a lower priority value and/or "optional to maintain" capability has been assigned for virtual network instance #1.

Virtual network instance priority table 900 may comprise a virtual network instance ID field 902, a designated forwarding node address field 904, a capability field 906, and a priority field 908. The virtual network instance ID field 902 may indicate the virtual network instance (e.g. virtual network instance #1) that may comprise one or more designated forwarding nodes that participate in the virtual network instance. The designated forwarding node field 904 may indicate the addresses of the designated forwarding nodes participating in the virtual network instances. In FIG. 9, three designated forwarding nodes with designated forwarding node address #1, designated forwarding node address #2, and designated forwarding node address #3 may participate in virtual network instance #1. The capability field 906 may indicate whether the designated forwarding node needs to maintain a designated forwarding node role. When the capability equals "must maintain," then designated forwarding node may not re-assign the designated forwarding node role to other designated forwarding nodes and/or access nodes. However, when the capability equals "optional to maintain," the designated forwarding node may relinquish the designated forwarding node role. As shown in FIG. 9, designated forwarding nodes #1 and #2 may be assigned a "must maintain" capability, while designated forwarding node #3 may be assigned an "optional to maintain," and thus may have the option to relinquish the designated forwarding node role. The priority field 908 may indicate the priority of the designated forwarding node maintaining the designated forwarding node role. In FIG. 9, "high priority" may be assigned to designated forwarding nodes #1 and #2, while designated forwarding node #3 may be assigned a "medium priority."

FIG. 10 is a table describing the elements of an embodiment of a designated forwarding node priority table 1000. The designated forwarding node priority table 1000 may comprise a designated forwarding node address field 1002, a virtual network instance list field 1004, and a convenience level of forwarding for the virtual network instance field 1006. The designated forwarding node address field 1002 and the virtual network instance list field 1006 may be substantially similar to the designated forwarding node address field 702 and the virtual network instance list field 704 as described in FIG. 7. Similar to FIG. 7, the designated forwarding node address #1 may indicate the address of the node, and virtual network instance #1-#3 may indicate the virtual network instances the node has been selected as a designated forwarding node. The convenience level of forwarding the virtual network instance field 1006 may indicate how convenient the designated forwarding node may forward data to end nodes within the virtual network instance. In FIG. 10, the convenience level or weighted value may be at 50% for virtual network instance #1, 40% for virtual network instance #2, and 10% for virtual network instance #3. Similar to the virtual network instance priority table 900, the designated forwarding node priority table 1000 may be stored within a designated forwarding node, a directory node, and/or some other network device.

In one embodiment, the convenience level may range from 1 to 100, with 100 being the most convenient to forward to end node and one being the least convenient. One way to calculate convenience may be to base the convenience level on the forwarding capacity and bandwidth of the designated forwarding node at the virtual network instance. Another embodiment may calculate the convenience level based on the percentage of end nodes attached to the designated forwarding node participating in the virtual network instance. The higher percentage of end nodes attached to a designated forwarding node, the higher the percentage that the designated forwarding node may be able to forward a frame directly to a destination within one hop. In FIG. 10, designated forwarding node #1 may participate in three virtual network instances. Virtual network instance #3 may have the lowest convenience, and thus the lowest priority. Hence, when relinquishing the role of designated forwarding nodes for virtual network instances, designated forwarding node #1 may relinquish virtual network instance #3 first before relinquishing virtual network instance #2 and virtual network instance #1.

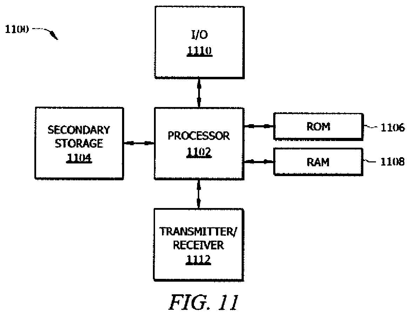

The schemes described above may be implemented on any general-purpose computer system, such as a computer or network component with sufficient processing power, memory resources, and network throughput capability to handle the necessary workload placed upon it. FIG. 11 illustrates a schematic diagram of a general-purpose computer system 1100 suitable for implementing one or more embodiments of the methods disclosed herein, such as the access node 106, the end nodes 108, and directory node 112. The computer system 1100 includes a processor 1102 (which may be referred to as a central processor unit or CPU) that is in communication with memory devices including secondary storage 1104, read only memory (ROM) 1106, random access memory (RAM) 1108, transmitter/receiver 1112, and input/output (I/O) device 1110. Although illustrated as a single processor, the processor 1102 is not so limited and may comprise multiple processors. The processor 1102 may be implemented as one or more CPU chips, cores (e.g., a multi-core processor), field-programmable gate arrays (FPGAs), application specific integrated circuits (ASICs), and/or digital signal processors (DSPs), and/or may be part of one or more ASICs. The processor 1102 may be configured to implement any of the schemes described herein, such as methods 300, method 350, method 400, and method 800. The processor 1102 may be implemented using hardware, software, or both.

The secondary storage 1104 is typically comprised of one or more disk drives or tape drives and is used for non-volatile storage of data and as an over-flow data storage device if the RAM 1108 is not large enough to hold all working data. The secondary storage 1104 may be used to store programs that are loaded into the RAM 1108 when such programs are selected for execution. The ROM 1106 is used to store instructions and perhaps data that are read during program execution. The ROM 1106 is a non-volatile memory device that typically has a small memory capacity relative to the larger memory capacity of the secondary storage 1104. The RAM 1108 is used to store volatile data and perhaps to store instructions. Access to both the ROM 1106 and the RAM 1108 is typically faster than to the secondary storage 1104. The secondary storage 1104, ROM 1106, and/or RAM 1108 may be non-transitory computer readable mediums and may not include transitory, propagating signals. Any one of the secondary storage 1104, ROM 1106, or RAM 1108 may be referred to as a memory, or these modules may be collectively referred to as a memory. Any of the secondary storage 1104, ROM 1106, or RAM 1108 may be used to store forwarding information, mapping information, capability information, and priority information as described herein. The processor 1102 may generate the forwarding information, mapping information, capability information, and priority information in memory and/or retrieve the forwarding information, mapping information, capability information, and priority information from memory.

The transmitter/receiver 1112 may serve as an output and/or input device of the access node 106, the end nodes 108, and directory node 112. For example, if the transmitter/receiver 1112 is acting as a transmitter, it may transmit data out of the computer system 1100. If the transmitter/receiver 1112 is acting as a receiver, it may receive data into the computer system 1100. The transmitter/receiver 1112 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards such as code division multiple access (CDMA), global system for mobile communications (GSM), long-term evolution (LTE), worldwide interoperability for microwave access (WiMAX), and/or other air interface protocol radio transceiver cards, and other well-known network devices. The transmitter/receiver 1112 may enable the processor 1102 to communicate with an Internet or one or more intranets. I/O devices 1110 may include a video monitor, liquid crystal display (LCD), touch screen display, or other type of video display for displaying video, and may also include a video recording device for capturing video. I/O devices 1110 may also include one or more keyboards, mice, or track balls, or other well-known input devices.

It is understood that by programming and/or loading executable instructions onto the computer system 1100, at least one of the processor 1102, the RAM 1108, and the ROM 1106 are changed, transforming the computer system 1100 in part into a particular machine or apparatus, e.g., a designated forwarding node, having the novel functionality taught by the present disclosure. It is fundamental to the electrical engineering and software engineering arts that functionality can be implemented by loading executable software into a computer, which can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, R₁, and an upper limit, Rᵤ, is disclosed, any number falling within the range is specifically disclosed. In particular, the following numbers within the range are specifically disclosed: R = R₁+k ^{∗} (Rᵤ - R₁), wherein k is a variable ranging from 1 percent to 100 percent with a 1 percent increment, i.e., k is 1 percent, 2 percent, 3 percent, 4 percent, 7 percent, ..., 70 percent, 71 percent, 72 percent, ..., 97 percent, 96 percent, 97 percent, 98 percent, 99 percent, or 100 percent. Moreover, any numerical range defined by two R numbers as defined in the above is also specifically disclosed. The use of the term about means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application. The disclosure of all patents, patent applications, and publications cited in the disclosure are hereby incorporated by reference, to the extent that they provide exemplary, procedural, or other details supplementary to the disclosure.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise.

## Claims

1. A method for forwarding data within a virtual network instance comprising a plurality of end nodes using a designated forwarding node, wherein the method comprises:
maintaining, within a designated forwarding node, a plurality of complete forwarding information for all of the end nodes within the virtual network instance;
receiving a data packet destined for any of the end nodes in the virtual network instance; and
forwarding the data packet based on the forwarding information,
wherein the virtual network instance comprises a plurality of end nodes wherein the designated forwarding node is directly connected to some of the end nodes within the virtual network instance;
**characterized by**
removing the role as the designated forwarding node for the virtual network instance when resources consumed within the designated forwarding node crosses a certain threshold.

2. The method of claim 1 further comprising advertising an announcement message that provides a list of virtual network instances the designated forwarding node manages all of the forwarding information for.

3. The method of claim 1 further comprising receiving a reachability information packet and updating the forwarding information based on the reachability information packet.

4. The method of claim 1 further comprising:
sending a first message for a request to be removed as the designated forwarding node for the virtual network instance;
deleting the forwarding information for the virtual network instance when a second designated forwarding node acknowledges the request; and
choosing a second virtual network instance based on priority when no positive reply is received,
wherein at least one virtual network instance is removed until the designated forwarding node is under a resource limit.

5. The method of claim 4 further comprising:
sending a second message that requests an access node to take over as a second designated forwarding node when no reply is received
receiving a positive reply message; and
either sending the complete forwarding information for the first virtual network instance to the access node or requesting the access node to get the complete forwarding information for the first virtual network instance from a directory server.

6. The method of claim 1 further comprising advertising a capability to resolve mapping between a plurality of addresses for the end nodes and a plurality of addresses for a plurality of access nodes directly attached to the end nodes.

7. A network node, configured as a designated forwarding node within a virtual network instance comprising a plurality of end nodes, comprising
a processor configured to
maintain a plurality of complete forwarding information for all of the end nodes within the virtual network instance;
receive a data packet destined for any of the end nodes in the virtual network instance;
and
forward the data packet based on the forwarding information,
wherein the network node is directly connected to some of the end nodes within the virtual network instance;
**characterized by**
removing the role as the designated forwarding node for the virtual network instance when resources consumed within the designated forwarding node crosses a certain threshold.

8. The network node of claim 7, wherein the processor is further configured to advertise an announcement message that provides a list of virtual network instances the designated forwarding node manages all of the forwarding information for.

9. The network node of claim 7, wherein the processor is further configured to receive a reachability information packet and to update the forwarding information based on the reachability information packet.

10. The network node of claim 7, wherein the processor is further configured to:
send a first message for a request to be removed as the designated forwarding node for the virtual network instance;
delete the forwarding information for the virtual network instance when a second designated forwarding node acknowledges the request; and
choose a second virtual network instance based on priority when no positive reply is received,
wherein at least one virtual network instance is removed until the designated forwarding node is under a resource limit.

11. The network node of claim 10, wherein the processor is further configured to:
send a second message that requests an access node to take over as a second designated forwarding node when no reply is received
receive a positive reply message; and
either send the complete forwarding information for the first virtual network instance to the access node or request the access node to get the complete forwarding information for the first virtual network instance from a directory server.

12. The network node of claim 7 wherein the processor is further configured to advertise a capability to resolve mapping between a plurality of addresses for the end nodes and a plurality of addresses for a plurality of access nodes directly attached to the end nodes.

## Patentansprüche

1. Verfahren zur Weiterleitung von Daten innerhalb einer virtuellen Netzwerkinstanz, die eine Mehrzahl von Endknoten umfasst, unter Verwendung eines festgelegten Weiterleitungsknotens, wobei das Verfahren umfasst:
Führen einer Mehrzahl von vollständigen Weiterleitungsinformationen innerhalb eines festgelegten Weiterleitungsknotens für alle der Endknoten innerhalb der virtuellen Netzwerkinstanz;
Empfangen eines Datenpakets, das für einen der Endknoten in der virtuellen Netzwerkinstanz bestimmt ist;
Weiterleiten des Datenpakets basierend auf den Weiterleitungsinformationen;
wobei die virtuelle Netzwerkinstanz eine Mehrzahl von Endknoten umfasst, wobei der festgelegte Weiterleitungsknoten mit einigen der Endknoten innerhalb der virtuellen Netzwerkinstanz direkt verbunden ist;
**gekennzeichnet durch**
Entfernen der Funktion als festgelegter Weiterleitungsknoten für die virtuelle Netzwerkinstanz, wenn Ressourcen, die innerhalb des festgelegten Weiterleitungsknotens verbraucht werden, eine bestimmte Schwelle überschreiten.

2. Verfahren nach Anspruch 1, ferner umfassend ein Bekanntgeben einer Mitteilungsnachricht, die eine Liste virtueller Netzwerkinstanzen bereitstellt, für die der festgelegte Weiterleitungsknoten alle der Weiterleitungsinformationen verwaltet.

3. Verfahren nach Anspruch 1, ferner umfassend ein Empfangen eines Erreichbarkeitsinformationspakets und Aktualisieren der Weiterleitungsinformationen basierend auf dem Erreichbarkeitsinformationspaket.

4. Verfahren nach Anspruch 1, ferner umfassend:
Senden einer ersten Nachricht für eine Anforderung zur Entfernung als festgelegter Weiterleitungsknoten für die virtuelle Netzwerkinstanz;
Löschen der Weiterleitungsinformationen für die virtuelle Netzwerkinstanz, wenn ein zweiter festgelegter Weiterleitungsknoten die Anforderung bestätigt; und
Wählen einer zweiten virtuellen Netzwerkinstanz basierend auf einer Priorität, wenn keine positive Antwort empfangen wird,
wobei mindestens eine virtuelle Netzwerkinstanz entfernt wird, bis der festgelegte Weiterleitungsknoten unter einer Ressourcengrenze ist.

5. Verfahren nach Anspruch 4, ferner umfassend:
Senden einer zweiten Nachricht, die einen Zugangsknoten auffordert, als zweiter festgelegter Weiterleitungsknoten zu übernehmen, wenn keine Antwort empfangen wird;
Empfangen einer positiven Antwortnachricht; und
entweder Senden der vollständigen Weiterleitungsinformationen für die erste virtuelle Netzwerkinstanz an den Zugangsknoten oder Auffordern des Zugangsknotens, die vollständigen Weiterleitungsinformationen für die erste virtuelle Netzwerkinstanz von einem Verzeichnisserver einzuholen.

6. Verfahren nach Anspruch 1, ferner umfassend ein Bekanntgeben einer Fähigkeit zum Auflösen von Zuordnung zwischen einer Mehrzahl von Adressen für die Endknoten und einer Mehrzahl von Adressen für eine Mehrzahl von Zugangsknoten, die direkt an die Endknoten angeschlossen sind.

7. Netzwerkknoten, der als festgelegter Weiterleitungsknoten innerhalb einer virtuellen Netzwerkinstanz, die eine Mehrzahl von Endknoten umfasst, ausgelegt ist und umfasst;
einen Prozessor, der konfiguriert ist zum:
Führen einer Mehrzahl von vollständigen Weiterleitungsinformationen für alle der Endknoten innerhalb der virtuellen Netzwerkinstanz;
Empfangen eines Datenpakets, das für einen der Endknoten in der virtuellen Netzwerkinstanz bestimmt ist;
Weiterleiten des Datenpakets basierend auf den Weiterleitungsinformationen,
wobei der Netzwerkknoten mit einigen der Endknoten innerhalb der virtuellen Netzwerkinstanz direkt verbunden ist;
**gekennzeichnet durch**
Entfernen der Funktion als festgelegter Weiterleitungsknoten für die virtuelle Netzwerkinstanz, wenn Ressourcen, die innerhalb des festgelegten Weiterleitungsknotens verbraucht werden, eine bestimmte Schwelle überschreiten.

8. Netzwerkknoten nach Anspruch 7, wobei der Prozessor ferner so ausgelegt ist, dass er eine Mitteilungsnachricht bekanntgibt, die eine Liste virtueller Netzwerkinstanzen bereitstellt, für die der festgelegte Weiterleitungsknoten alle der Weiterleitungsinformationen verwaltet.

9. Netzwerkknoten nach Anspruch 7, wobei der Prozessor ferner zum Empfangen eines Erreichbarkeitsinformationspakets und zum Aktualisieren der Weiterleitungsinformationen basierend auf dem Erreichbarkeitsinformationspaket ausgelegt ist.

10. Netzwerkknoten nach Anspruch 7, wobei der Prozessor ferner ausgelegt ist zum:
Senden einer ersten Nachricht für eine Anforderung zu seiner Entfernung als festgelegter Weiterleitungsknoten für die virtuelle Netzwerkinstanz;
Löschen der Weiterleitungsinformationen für die virtuelle Netzwerkinstanz, wenn ein zweiter festgelegter Weiterleitungsknoten die Anforderung bestätigt; und
Wählen einer zweiten virtuellen Netzwerkinstanz basierend auf einer Priorität, wenn keine positive Antwort empfangen wird,
wobei mindestens eine virtuelle Netzwerkinstanz entfernt wird, bis der festgelegte Weiterleitungsknoten unter einer Ressourcengrenze ist.

11. Netzwerkknoten nach Anspruch 10, wobei der Prozessor ferner ausgelegt ist zum:
Senden einer zweiten Nachricht, die einen Zugangsknoten auffordert, als zweiter festgelegter Weiterleitungsknoten zu übernehmen, wenn keine Antwort empfangen wird; Empfangen;
Empfangen einer positiven Antwortnachricht; und
entweder Senden der vollständigen Weiterleitungsinformationen für die erste virtuelle Netzwerkinstanz an den Zugangsknoten oder Auffordern des Zugangsknotens, die vollständigen Weiterleitungsinformationen für die erste virtuelle Netzwerkinstanz von einem Verzeichnisserver einzuholen.

12. Netzwerkknoten nach Anspruch 7, wobei der Prozessor ferner so ausgelegt ist, dass er eine Fähigkeit zum Auflösen von Zuordnung zwischen einer Mehrzahl von Adressen für die Endknoten und einer Mehrzahl von Adressen für eine Mehrzahl von Zugangsknoten bekanntgibt, die direkt an die Endknoten angeschlossen sind.

## Revendications

1. Procédé permettant d'acheminer des données à l'intérieur d'une instance de réseau virtuel comportant une pluralité de nœuds d'extrémité en utilisant un nœud d'acheminement désigné, comprenant :
maintenir, à l'intérieur d'un nœud d'acheminement désigné, une pluralité d'informations d'acheminement complètes pour tous les nœuds d'extrémité à l'intérieur de l'instance de réseau virtuel ;
recevoir un paquet de données destiné à l'un quelconque des nœuds d'extrémité dans l'instance de réseau virtuel ; et
acheminer le paquet de données sur la base des informations d'acheminement,
l'instance de réseau virtuel comportant une pluralité de nœuds d'extrémité, le nœud d'acheminement désigné étant connecté directement à certains des nœuds d'extrémité à l'intérieur de l'instance de réseau virtuel ;
**caractérisé par**
supprimer le rôle en tant que nœud d'acheminement désigné pour l'instance de réseau virtuel lorsque des ressources consommées à l'intérieur du nœud d'acheminement désigné dépassent un certain seuil.

2. Procédé selon la revendication 1, comprenant en outre transmettre un message d'annonce qui fournit une liste d'instances de réseau virtuel pour lesquelles le nœud d'acheminement désigné gère toutes les informations d'acheminement.

3. Procédé selon la revendication 1, comprenant en outre recevoir un paquet d'informations d'accessibilité et mettre à jour les informations d'acheminement sur la base du paquet d'informations d'accessibilité.

4. Procédé selon la revendication 1, comprenant en outre :
envoyer un premier message de demande de suppression en tant que nœud d'acheminement désigné pour l'instance de réseau virtuel ;
supprimer les informations d'acheminement pour l'instance de réseau virtuel lorsqu'un deuxième nœud d'acheminement désigné accuse réception de la demande ; et
choisir une deuxième instance de réseau virtuel sur la base d'une priorité lorsqu'aucune réponse positive n'est reçue,
au moins une instance de réseau virtuel étant supprimée jusqu'à ce que le nœud d'acheminement désigné soit sous une limite de ressources.

5. Procédé selon la revendication 4, comprenant en outre :
envoyer un deuxième message qui demande à un nœud d'accès de reprendre en tant que deuxième nœud d'acheminement désigné lorsqu'aucune réponse n'est reçue ;
recevoir un message de réponse positive ; et
envoyer les informations d'acheminement complètes pour la première instance de réseau virtuel au nœud d'accès ou demander au nœud d'accès d'obtenir les informations d'acheminement complètes pour la première instance de réseau virtuel à partir d'un serveur de répertoire.

6. Procédé selon la revendication 1, comprenant en outre annoncer une capacité de résolution d'un mappage entre une pluralité d'adresses pour les nœuds d'extrémité et une pluralité d'adresses pour une pluralité de nœuds d'accès attachés directement aux nœuds d'extrémité.

7. Nœud de réseau, configuré en tant que un nœud d'acheminement désigné à l'intérieur d'une instance de réseau virtuel comportant une pluralité de nœuds d'extrémité, comprenant :
un processeur configuré pour
maintenir une pluralité d'informations d'acheminement complètes pour tous les nœuds d'extrémité à l'intérieur de l'instance de réseau virtuel ;
recevoir un paquet de données destiné à l'un quelconque des nœuds d'extrémité dans l'instance de réseau virtuel ; et
acheminer le paquet de données sur la base des informations d'acheminement,
le nœud de réseau étant connecté directement à certains des nœuds d'extrémité à l'intérieur de l'instance de réseau virtuel ;
**caractérisé par**
supprimer le rôle en tant que nœud d'acheminement désigné pour l'instance de réseau virtuel lorsque des ressources consommées à l'intérieur du nœud d'acheminement désigné dépassent un certain seuil.

8. Nœud de réseau selon la revendication 7, dans lequel le processeur est en outre configuré pour transmettre un message d'annonce qui fournit une liste d'instances de réseau virtuel pour lesquelles le nœud d'acheminement désigné gère toutes les informations d'acheminement.

9. Nœud de réseau selon la revendication 7, dans lequel le processeur est en outre configuré pour recevoir un paquet d'informations d'accessibilité et pour mettre à jour les informations d'acheminement sur la base du paquet d'informations d'accessibilité.

10. Nœud de réseau selon la revendication 7, dans lequel le processeur est en outre configuré pour :
envoyer un premier message de demande de suppression en tant que nœud d'acheminement désigné pour l'instance de réseau virtuel ;
supprimer les informations d'acheminement pour l'instance de réseau virtuel lorsqu'un deuxième nœud d'acheminement désigné accuse réception de la demande ; et
choisir une deuxième instance de réseau virtuel sur la base d'une priorité lorsqu'aucune réponse positive n'est reçue,
au moins une instance de réseau virtuel étant supprimée jusqu'à ce que le nœud d'acheminement désigné soit sous une limite de ressources.

11. Nœud de réseau selon la revendication 10, dans lequel le processeur est en outre configuré pour :
envoyer un deuxième message qui demande à un nœud d'accès de reprendre en tant que deuxième nœud d'acheminement désigné lorsqu'aucune réponse n'est reçue ;
recevoir un message de réponse positive ; et
envoyer les informations d'acheminement complètes pour la première instance de réseau virtuel au nœud d'accès ou demander au nœud d'accès d'obtenir les informations d'acheminement complètes pour la première instance de réseau virtuel à partir d'un serveur de répertoire.

12. Nœud de réseau selon la revendication 7, dans lequel le processeur est en outre configuré pour annoncer une capacité de résolution d'un mappage entre une pluralité d'adresses pour les nœuds d'extrémité et une pluralité d'adresses pour une pluralité de nœuds d'accès attachés directement aux nœuds d'extrémité.
